(19) Europäisches Patentamt
European Patent Office
Office européen des brevets

(11) **EP 0 543 321 B1**

(12) **EUROPÄISCHE PATENTSCHRIFT**

(45) Veröffentlichungstag und Bekanntmachung des Hinweises auf die Patenterteilung:
**24.01.1996 Patentblatt 1996/04**

(51) Int. Cl.[6]: **B60G 17/04**, B60G 9/02, B60G 21/073

(21) Anmeldenummer: **92119601.0**

(22) Anmeldetag: **17.11.1992**

(54) **Hydropneumatisch gefederte Radaufhängung**

Hydropneumatic suspension

Suspension hydropneumatique

(84) Benannte Vertragsstaaten:
**AT BE CH DE ES FR GB IT LI**

(30) Priorität: **21.11.1991 DE 4138208**

(43) Veröffentlichungstag der Anmeldung:
**26.05.1993 Patentblatt 1993/21**

(73) Patentinhaber: **DEERE & COMPANY**
**Moline, Illinois 61265 (US)**

(72) Erfinder:
• **Glaser, Fritz, Dr.**
**W-6660 Zweibrücken (DE)**

• **Munz, Roman**
**W-6730 Neustadt (DE)**

(74) Vertreter: **Feldmann, Bernhard et al**
**D-68140 Mannheim (DE)**

(56) Entgegenhaltungen:
**DE-A- 3 742 883       DE-A- 3 834 693**
**DE-B- 1 129 845       US-A- 3 353 815**

• **PATENT ABSTRACTS OF JAPAN vol. 16, no. 72 (M-1213)21. Februar 1992 & JP-A-32 62 720 (HINO MOTORS LTD) 22. November 1991**

## Beschreibung

Die Erfindung betrifft die Radaufhängung für ein Fahrzeug, insbesondere für Nutz- und landwirtschaftliche Fahrzeuge, gemäß dem Oberbegriff des Patentanspruchs 1.

Durch die DE 38 34 693 A1 wird ein Schlepper mit einer lenkbaren Starrachse beschrieben, die gegenüber dem Fahrgestell abgefedert ist. Zu diesem Zweck ist zwischen dem Vorderachsbock und einem Querlenker der Vorderachse ein vertikal verlaufendes Feder-Dämpfer-Element vorgesehen, welches aus einem Hydraulikzylinder besteht, der gegenüber einem Hydraulikspeicher abgefedert ist. Als Dämpferelement dient eine innerhalb der Verbindung von Hydraulikzylinder und Hydraulikspeicher angeordnete Drossel. Weiterhin ist in dieser Verbindung ein 2/2-Wegeventil angeordnet, das in einer Stellung für eine Blockierung des Feder-Dämpfer-Elementes sorgt, indem es den Zu- bzw. Ablauf des Hydraulikzylinders absperrt. Diese bekannte Federanordnung ist jedoch nur in einem durch den Arbeitsbereich des Hydraulikspeichers vorgegebenen begrenzten Lastbereich des Schleppers wirksam. Für Stützlasten, die außerhalb dieses Lastbereiches liegen, ist keine gefederte Radaufhängung gegeben.

Insbesondere bei Nutz- und landwirtschaftlichen Fahrzeugen können die Achslasten bzw. Aufstützkräfte des Fahrzeugaufbaus auf eine gefederte Achse durch Änderungen des Beladungszustandes innerhalb weiter Grenzen schwanken. Bei Schleppern der mittleren Leistungsklasse treten beispielsweise auf der Vorderachse Stützlasten des Aufbaus auf, die beim Pflügen 4000 Newton und bei Frontarbeiten 48000 Newton betragen können. Das Verhältnis von maximaler zu minimaler Stützlast beträgt hierbei 12. Diese unterschiedlichen Stützlasten des Aufbaus müssen durch Federungselemente mit angepaßten Federungskräften und angepaßten hydraulischen Dämpfungskräften aufgefangen werden. In der Fahrzeugtechnik gilt der Erfahrungsgrundsatz, daß die jeweiligen Eigenfrequenzen des Aufbaus bei allen Beladungszuständen annähernd konstant gehalten werden sollen. Daraus folgt, daß die Federrate und die Dämpfungsrate annähernd proportional an die Belastungsänderungen angepaßt werden müssen.

Aus dem LKW-Bereich ist es bekannt, durch einen Kompressor die benötigte Luftmenge über einen Luftvorratsbehälter in Luftfedern einzuspeisen, um den sich ändernden Lastbedingungen Rechnung zu tragen. Bei vielen Fahrzeugen, insbesondere auch bei Schleppern, ist jedoch kein Druckluftsystem vorhanden, so daß die LKW-Lösung hier zu kostspielig wäre. Weiterhin bauen Luftfedern wegen ihres relativ niedrigen Innendruckes im Vergleich zu Hydrospeichersystemen sehr voluminös. Der erforderliche Bauraum ist jedoch häufig nicht vorhanden.

Insbesondere bei Schleppern mit einer hohen Endgeschwindigkeit empfiehlt sich die Verwendung einer Federanordnung der Vorderachse, um einerseits die Fahrsicherheit des Schleppers zu verbessern und andererseits den Komfort für den Fahrer zu erhöhen. Bei ausschließlicher Federung des Schleppers über Reifen ohne Vorderachs- und Hinterachsfederung führt dies bei Transportfahrten mit schweren Heckanbaugeräten zu einer starken Entlastung der Vorderachse und verstärkten Nickschwingungen des Schleppers. Wegen der dynamischen Änderungen der Radlast bei zunehmender Fahrgeschwindigkeit kann dies die Lenkbarkeit bis hin zu ihrem vollständigen Verlust beeinträchtigen. Hierdurch können äußerst kritische Situationen im Straßenverkehr eintreten. Ferner ist der Fahrer erheblichen Fahrzeugschwingungen ausgesetzt, was zu frühzeitigem Ermüden und zum Nachlassen der Leistungs- und Reaktionsfähigkeit führen kann.

Die DE-C-22 43 585 beschreibt eine hydropneumatische Federung für Kraftfahrzeuge gemäß dem Oberbegriff des Anspruchs 1, bei der einem Rad des Fahrzeuges ein hydraulischer Stellzylinder zugeordnet ist, der durch einen Steuerschieber wahlweise mit jeweils einem von zwei unter unterschiedlichen Gasdrücken stehenden hydropneumatischen Druckspeichern verbindbar ist. Der Lastdruck wirkt auf ein Vorsteuerventil, welches bei Überschreiten eines ersten oder bei Unterschreiten eines zweiten Lastdruckwertes die an einer Stirnseite des federvorgespannten Steuerschiebers liegende Steuerkammer entweder mit dem Lastdruck beaufschlagt oder druckentlastet. Wird die Steuerkammer mit dem Lastdruck beaufschlagt, so verschiebt sich der Steuerschieber und verbindet in einer zweiten Schaltstellung den Stellzylinder mit dem höher vorgespannten Druckspeicher. Andernfalls wird in einer ersten Schaltstellung der Stellzylinder mit dem niedriger vorgespannten Druckspeicher verbunden. Bei der Umschaltung von einem Druckspeicher auf den anderen treten unangenehme Schaltstöße auf. Die Häufigkeit der Schaltstöße soll dadurch vermindert werden, daß die Umschaltung von der ersten in die zweite Schaltstellung bei einem höheren Druck erfolgt als die Umschaltung von der zweiten in die erste Schaltstellung. Eine Umschaltung zwischen den beiden Druckspeichern erfolgt daher nur dann, wenn nacheinander sowohl der erste als auch der zweite Lastdruckwert unter- oder überschritten wird.

Die der Erfindung zugrunde liegende Aufgabe wird darin gesehen, eine hydropneumatisch gefederte Radaufhängung der eingangs genannten Art anzugeben, die für die Aufnahme sehr unterschiedlicher Stützlasten geeignet ist, die Fahrsicherheit und den Komfort des Fahrzeuges erhöht und die genannten Probleme überwindet. Insbesondere soll sowohl für den stationären als auch für den dynamischen Fall ein fließender Übergang bei der Umschaltung zwischen den einzelnen Hydrospeichern unter Vermeidung harter Umschaltstöße gegeben sein.

Die Aufgabe wird ausgehend von dem Oberbegriff des Patentanspruches 1 durch dessen kennzeichnende Merkmale gelöst.

Die Zuschaltung von Hydrospeichern mit unterschiedlichem Volumen und/oder unterschiedlicher Vorspannung (Innendrücke) läßt eine Anpassung an die unterschiedlichsten Belastungsfälle und eine annähernd ideale Federkennlinie für diese Belastungsfälle zu. Werden mehrere Hydrospeicher an den wenigstens einen Hydraulikzylinder angeschlossen, so ist das wirksame Gesamtspeichervolumen größer, als wenn lediglich ein Hydrospeicher angeschlossen wäre. Eine Vergrößerung des Speichervolumens führt zu einer geringeren Gesamtfederrate. Daher ist durch eine Anpassung des Speichervolumens, die durch Zu- oder Abschalten von einzelnen Hydrospeichern erfolgen kann, eine auf die jeweilige Belastung einstellbare progressive Federrate realisierbar. Bei der erfindungsgemäßen Radaufhängung läßt sich die Federrate der hydropneumatischen Federung in weiten Grenzen beliebig einstellen.

Die Größe des wirksamen Speichervolumens und die Größe der Federrate verhalten sich zueinander im wesentlichen umgekehrt proportional. Die Federrate läßt sich daher durch Zu- oder Abschalten weiterer Hydraulikspeicher mit gleichem Gasdruck nur durch Verwendung relativ vieler Hydrospeicher in weiten Grenzen einstellen.

Es wird daher die Verwendung unterschiedlich vorgespannter Hydrospeicher vorgeschlagen. Diese können je nach der Höhe der Stützlast und damit dem auf den Hydraulikzylindern lastenden Systemdruck zu- oder abgeschaltet werden, um eine annähernd ideale Federkennlinie für alle Belastungsfälle zu erhalten. Mit steigendem Fülldruck (Vorspannung) des Hydrospeichers steigt dessen Federrate. Andererseits ist das Volumen des Hydrospeichers bei eingegebenem Fülldruck für den Federweg bei Belastungsänderungen verantwortlich. Durch Zu- oder Abschalten von Hydrospeichern läßt sich daher die gewünschte Federrate des hydropneumatischen Federungssystems unter Aufrechterhaltung eines gewünschten Federweges in weiten Grenzen beliebig einstellen.

Beispielsweise kann eine lastabhängige Auswahl von verschieden vorgespannten Hydrospeichern erfolgen, bei der im wesentlichen immer nur ein oder auch zwei Hydrospeicher für einen bestimmten Lastbereich zuständig ist. Hierfür kann der statische Druck durch Drucksensoren bestimmt werden und zur Steuerung von Umschaltventilen herangezogen werden, durch die eine Speicherauswahl erfolgt, indem der oder die für den Druckbereich geeigneten Druckspeicher an die Hydraulikzylinder angeschlossen werden. Eine solche Auslegung erfordert eine Speicherauswahl im statischen Fall (z. B. Stillstand des Fahrzeuges). Dies ist notwendig, da die dynamischen Drücke eines Belastungsfalls in den Druckbereich kommen können, der die Auswahl eines anderen Hydrospeichers veranlaßt. Für eine gut ausgelegte Federung werden jedoch bei einem statischen Belastungsverhältnis zwischen größter und kleinster Last von 12 immer noch eine relativ große Anzahl von Hydrospeichern benötigt.

Durch eine Auslegung der Hydrospeicher, die auch im dynamischen Fall einen Übergang zwischen verschieden vorgespannten Hydrospeichern ermöglicht, kann die Anzahl der benötigten Hydrospeicher reduziert werden. Für die hydropneumatische Federung der Vorderachse eines Ackerschleppers sind vorzugsweise drei Hydrospeicher vorgesehen, durch die sich der gesamte Stützlastbereich abdecken läßt. Es wird vorgeschlagen, daß zwischen jedem Hydrospeicher und dem wenigstens einen Hydraulikzylinder in einer Zuströmleitung wenigstens ein Druckminderungsventil zur Festlegung der oberen und in einer Rückströmleitung ein Druckbegrenzungsventil zur Festlegung der unteren Druckgrenze des Arbeitsbereiches des Hydrospeichers eingesetzt sind. Zu dem Druckminderungsventil und dem Druckbegrenzungsventil ist je wenigstens ein Rückschlagventil in Reihe geschaltet.

Die Druckminderungsventile sind für den maximalen Betriebsdruck der einzelnen Hydrospeicher verantwortlich. Sie liegen jeweils in der Zuströmleitung zwischen dem Hydraulikzylinder und dem Hydrospeicher, in der durch die Verwendung eines Rückschlagventils lediglich eine Durchströmung von dem Hydraulikzylinder zu dem Hydrospeicher möglich ist (Durchströmung beim Einfedern). Übersteigt der Systemdruck (statisch oder dynamisch) den für den Hydrospeicher zulässigen Druck, so sperrt das Druckminderungsventil die Zuströmleitung. Der Speicher ist abgeschaltet. Ab jetzt ist der nächste, für höhere Belastungen ausgelegte Hydrospeicher für die Federung zuständig. Dieser Hydrospeicher ist höher vorgespannt als der abgeschaltete Hydrospeicher, weist jedoch ein etwa gleich großes Nominalvolumen auf wie dieser, um einen gleichen Federweg zu realisieren. Der abgeschaltete Hydrospeicher hält seinen maximalen Druck aufrecht, da das Öl nicht in das System mit höherem Druck zurückfließen kann. Fällt der Systemdruck wieder auf die obere Grenze des Einsatzbereiches des Hydrospeichers ab, so ist der Speicher noch mit dem maximal möglichen Ölvolumen gefüllt. Sinkt der Systemdruck weiter ab, so baut der Hydrospeicher sein maximales Ölvolumen über das offene Druckbegrenzungsventil in der Rückströmleitung wieder ab. Dies ermöglicht den Übergang zwischen zwei Hydrospeichern, bei dem theoretisch keine Ölverluste auftreten. Insbesondere für die dynamische Betriebsweise bedeutet dies, daß beim Übergang von einem ersten zu einem zweiten Hydrospeicher das vom ersten Hydrospeicher bis zu seinem Abschalten aufgenommene Öl beim Rückfedern in die statische Lage wieder vollständig freigegeben wird. Bei Druckerhöhung schaltet das Druckminderungsventil den Hydrospeicher ab und bei Druckabfall wieder zu.

Die Druckbegrenzungsventile oder Zuschaltventile legen den minimalen Betriebsdruck der einzelnen Hydrospeicher fest. Sie liegen jeweils in der Rückströmleitung zwischen dem Hydraulikzylinder und dem Hydrospeicher, in der durch die Verwendung eines Rückschlagventils lediglich eine Durchströmung von dem Hydrospeicher zu dem Hydraulikzylinder möglich ist. Im Betriebszustand eines Hydrospeichers ist das zugehörige Druckbegrenzungsventil auf Durchfluß geschaltet. Fällt der Systemdruck unter den Mindestdruck des Hydrospeichers ab, so sperrt das Druckbegrenzungsventil die Ölverbindung zwischen dem Hydrospeicher, in dem sich jetzt ein minimales Ölvolumen befindet und dem Hydraulikzylinder. Bei Unterschreiten dieser Druckgrenze fließt das Öl von einem geringer vorgespannten, für geringere Belastungsfälle ausgelegten Hydrospeicher, der mit annähernd maximalem Volumen gefüllt ist, in den Hydraulikzylinder zurück. Bei Druckerhöhungen, die den Mindestdruck eines Hydraulikspeichers überschreiten, wird Öl wieder in den Hydraulikspeicher gedrückt und das Druckbegrenzungsventil öffnet durch die Druckerhöhung die Rückströmleitung. Steigt der Systemdruck über den Druckbereich des Hydraulikspeichers an, so kann das Rückströmventil in der Rückströmleitung auf Durchfluß geschaltet bleiben, da aufgrund des höheren Systemöldruckes kein Öl aus dem Hydrospeicher entweichen kann. Das Rückschlagventil in der Rückströmleitung verhindert eine Flußrichtung des Öls vom Hydraulikzylinder aus in den Hydrospeicher.

Das Zusammenspiel zwischen dem Druckbegrenzungsventil eines Hydrospeichers mit einer größeren Vorspannung und dem Druckminderungsventil eines Hydrospeichers mit einer kleineren Vorspannung ermöglicht sowohl für den stationären als auch den dynamischen Fall einen fließenden Übergang der einzelnen Hydrospeicher.

Bei den Druckminderungs- und Druckbegrenzungsventilen handelt es sich vorzugsweise um selbsttätige Ventile, die den Druck des zugehörigen Hydrospeichers erfassen und bei Über- bzw. Unterschreiten eines vorgebbaren Druckwertes automatisch schließen bzw. öffnen.

Um Totpunkte, bei denen aufgrund der Schalthysteresis der Ventile kein Federspeicher an den Hydraulikzylinder angeschlossen wäre, zu vermeiden, wird eine Überschneidung der Arbeitsbereiche eines Hydrospeichers mit einer kleineren und eines Hydrospeichers mit einer nächsthöheren Vorspannung festgelegt. Dabei liegt der Schaltdruck des Druckbegrenzungsventils des höher vorgespannten Hydrospeichers etwas niedriger als der Schaltdruck des Druckminderungsventils des niedriger vorgespannten Hydrospeichers. In der Regel werden im Versuch die erforderlichen Arbeitsbereiche und Überschneidungen der Hydrospeicher und der zugehörigen Ventile ermittelt.

Durch die erfindungsgemäße Lösung läßt sich das Auftreten harter Stöße beim Umschalten und Wechsel zwischen den Kennlinien zweier Hydrospeicher vermeiden, da in dem Übergangsbereich immer zwei Hydrospeicher mit unterschiedlicher Vorspannung gemeinsam im Einsatz sind.

Die Dämpfung beeinflußt die Federungseigenschaften des Fahrzeugs. Dämpfungssysteme mit hohen Dämpfungsraten geben die Gewähr für eine gute Bodenhaftung, verringern aber den Fahrkomfort. Niedrige Dämpferwerte wirken komfortabler, sind aber der Fahrsicherheit nicht dienlich. Eine schwere angetriebene Starrachse benötigt wegen ihrer großen ungefederten Masse höhere Dämpfungskräfte als eine Einzelradaufhängung, um das Springen der Räder und somit den Verlust des Bodenkontaktes zu unterbinden.

Zur Dämpfung werden üblicherweise Stoßdämpfer der Federungsanordnung parallel geschaltet. Diese erfordern Platz und neigen zum Verkanten. Für eine gute Auslegung des Federungssystems sollten die Federrate und die Dämpfungskräfte annähernd um den gleichen Faktor verändert werden. Die Abfederung unterschiedlicher Massen erfolgt erfindungsgemäß durch eine Zu- oder Abschaltung von Hydraulikspeichern. Entsprechend sollte auch eine Anpassung der Dämpfung an die unterschiedlichen Massen erfolgen. Dies ist durch übliche Stoßdämpfer nicht möglich.

Zur Lösung dieser Probleme ist gemäß einer bevorzugten Ausgestaltung der Erfindung zwischen den Druckspeichern und den Hydraulikzylindern ein Dämpfungssystem unter Verwendung wenigstens eines lastabhängigen Drosselventils vorgesehen. Das Drosselventil erlaubt eine automatische Anpassung der Dämpfungskraft an die unterschiedlichen Lastverhältnisse. Der Druckabfall an dem Drosselventil entspricht der Dämpfungskraft. Zweckmäßigerweise enthält das Dämpfungssystem wenigstens ein Proportionaldrosselventil, das durch den auf dem wenigstens einen Hydraulikzylinder lastenden Hydraulikdruck ausgesteuert wird, und wenigstens eine zu diesem in Reihe geschaltete Konstantdrossel. Die Konstantdrossel kann auch in das Proportionalventil integriert sein.

Es ist zweckmäßig, das Dämpfungssystem mit unterschiedlichen Dämpfungskräften für das Einfedern und das Ausfedern vorzusehen, wobei die Dämpfungskräfte beim Ausfedern wesentlich größer (beispielsweise drei- bis viermal so groß) als beim Einfedern gewählt werden. Eine solche Aufteilung zwischen Zug- und Druckstufe hat den Vorteil, daß das Federungssystem plötzlich auftretende Stoßbelastungen durch Fahrbahnunebenheiten schnell und weich aufnehmen kann und durch das langsame Ausfedern die entstehenden Schwingungen rasch abklingen läßt. Ein Schwingen der Achse um die Mittellage klingt dadurch ebenfalls rasch ab, und die Bodenhaftung wird verbessert. Hierfür enthält das Dämpfungssystem vorzugsweise zwischen den Hydraulikzylindern und dem Federungssystem eine Hin- und eine Rückflußleitung, in denen je wenigstens ein Proportionaldrosselventil, wenigstens eine Konstantdrossel sowie wenigstens ein Rückschlagventil in Reihe geschaltet sind. Die Proportionaldrosselventile werden durch den auf dem Hydraulikzylinder lastenden Hydraulikdruck angesteuert. Durch geeignete Abstimmung der Proportionaldrosselventile und Konstantdrosseln kann in zweckmäßiger Weise auch das Rückschlagventil in der Rückflußleitung zwischen Federungssystem und Hydraulikzylinder entfallen.

Für bestimmte Schleppereinsätze sollte das Federungssystem gesperrt werden können. Solche Einsätze können z. B. extreme Frontlader- oder Ackerarbeiten sein. Bei Ackerarbeiten mit einem Pflug wird je nach Ausrüstungszustand des Schleppers die Tiefe der zu pflügenden Furche über das Hubwerk höhen- oder kraftgeregelt. Eine gefederte Vorderachse würde hierbei eine solche Regelung beeinträchtigen, da der gefederte Schlepper keinen eindeutigen Abstand zwischen Anbaugerät und Boden einhält. Es ist daher von Vorteil, zwischen den Druckspeichern und den Hydraulikzylindern wenigstens ein schaltbares Sperrventil vorzusehen. Durch das Sperrventil läßt sich zwar die Federungswirkung abschalten, die Pendelung einer Vorderachse bleibt jedoch weiter möglich.

Bei unterschiedlichen Lasten federt das Federungssystem unterschiedlich stark ein. Lageänderungen können auch durch Ausdehnung des Gases in den Hydrospeichern des Federungssystems, die ihre Ursache in Temperaturänderungen haben können, und durch Leckagen im Hydrauliksystem hervorgerufen werden. Es ist jedoch wünschenswert, daß der Schlepper unabhängig vom Belastungszustand eine gleichbleibende Höhenlage einhält. Eine bevorzugte Ausgestaltung der Erfindung schlägt daher vor, in einer Verbindungsleitung zwischen den Hydraulikzylindern und dem Federungssystem ein Niveauventil anzuordnen. Durch das Niveauventil lassen sich die Hydraulikzylinder wahlweise mit einer Hydraulikdruckquelle oder einer Hydraulikrücklaufleitung verbinden, wobei sich die Hydraulikkolben unabhängig vom Federungssystem ein- oder ausfahren lassen. Der Federweg läßt sich auf diese Weise für alle Ausrüstungszustände des Schleppers auf beispielsweise ±90 mm einstellen. Als Hydraulikdruckquelle kann das im Schlepper vorhandene Hydrauliksystem mit einer Hydraulikpumpe, die beispielsweise 160 bar liefert, verwendet werden. Die Hydraulikrücklaufleitung kann in einem Ölsumpf enden.

Vorzugsweise ist im Fülleitungszweig des Niveauventils eine Konstantdrossel und ein Rückschlagventil und im Entleerleitungszweig des Niveauventils eine Konstantdrossel vorgesehen. Durch die Konstantdrosseln wird eine langsame Niveauangleichung für beide Ölströmungsrichtungen erreicht. Das Rückschlagventil in der Zuführleitung verhindert ein Entweichen von Öl beim Zuschalten der Druckquelle für den Fall, daß der dynamische Systemdruck im Federungssystem den maximalen Öldruck der Hydraulikquelle überschreitet.

Das Niveauventil wird vorzugsweise durch eine Niveauregelung angesteuert, die einen Mikroprozessor enthält. Der Mikroprozessor erhält Steuersignale von Sensoren, die die Höhenlage des Fahrzeugaufbaus über den Radträgern erfassen.

Gemäß einer bevorzugten Weiterbildung der Erfindung erfolgt die Bestimmung der Höhenlage über eine Niveauregelstange, die mit ihrem einen Ende gelenkig mit dem Radträger verbunden ist und mit ihrem anderen Ende in einer im wesentlichen senkrecht ausgerichteten Führung läuft. Die Führung ist gelenkig mit dem Fahrzeugaufbau verbunden. Die Niveauregelstange weist wenigstens einen Nocken auf, der mit wenigstens zwei an der Führung befestigten elektrischen Schaltern zusammenwirkt und bei einer Verschiebung der Niveauregelstange in der Führung Schaltfunktionen der Schalter auslöst, wenn der Nocken sich an den Schaltauslösern der Schalter vorbei bewegt. In analoger Weise kann natürlich auch die Führung an dem Radträger und die Stange an dem Fahrzeugaufbau befestigt sein. Die Schalter können mechanisch oder berührungslos ausgeführt sein.

Als Befestigungspunkt der Niveauregelstange wird vorzugsweise ein Punkt des Radträgers, beispielsweise einer Starrachse ausgewählt, auf den sich Pendelbewegungen möglichst wenig auswirken, da die Niveauregelung beim Pendeln nicht ansprechen sollte. Bedingt durch die Aufhängekinematik einer Starrachse ergibt sich meist kein fester Drehpunkt, um den die Achse pendelt. Für die Lagerung der Niveauregelstange wird jedoch eine Stelle in der Nähe der vertikalen Mittellinie der Achse bevorzugt.

Für eine vertikale Lage des Niveauregelungsgestänges wäre ein optimaler Anlenkpunkt für die Führung am Fahrzeugaufbau senkrecht über der Lagerungsstelle der Niveauregelstange an der Achse gegeben. Diese Lage läßt sich jedoch aus Platzgründen häufig nicht realisieren, da hier einerseits eine Frontzapfwelle verlaufen kann und zum anderen dieser Platz für die Unterbringung der Federungsspeicher und der Steuerventile vorgesehen ist. Eine bevorzugte Weiterbildung der Erfindung sieht daher vor, daß die Niveauregelstange gelenkig in der vertikalen Mittellinie einer Starrachse angreift, zunächst horizontal, beispielsweise parallel zur Starrachse verläuft und dann um beispielsweise 90° nach oben abgewinkelt ausgebildet ist, so daß der im wesentlichen vertikale Abschnitt der Niveauregelstange und der Führung eine außermittige Lage einnimmt.

Durch zwei Schalter, die mit einer Nocke der Niveauregelstange zusammenwirken, lassen sich ein oberer und ein unterer Lageschaltpunkt festlegen. Bei Über- oder Unterschreiten dieser Lageschaltpunkte steuert der Mikroprozessor das Niveauventil automatisch an, um Drucköl in die Hydraulikzylinder zu leiten oder aus diesen abzulassen und damit den Fahrzeugaufbau gegenüber der Achse anzuheben oder abzusenken. Dieser Niveauausgleich sollte jedoch nur dann eintreten, wenn Lageänderungen über längere Zeiträume eintreten und nicht nur die Folge von kurzzeitigen Schwingungen sind.

Die Niveauregelung sollte bei statischen Belastungsänderungen, bei Leckageverlusten oder bei auf Temperaturänderungen beruhenden Volumenänderungen in den Hydrospeichern, nicht jedoch bei dynamischen Belastungsänderungen infolge von Schwingungen ansprechen. Um dieses Ziel zu erreichen, schlägt eine Weiterbildung der Erfindung vor, vier im wesentlichen senkrecht übereinander angeordnete Schalter vorzusehen, die durch den Nocken der Niveauregelstange betätigbar sind. Die beiden mittleren Schalter kennzeichnen die Niveaulage der Achse und werden bei Belastungsänderungen geschlossen bzw. geöffnet. Bleibt dieser Schaltzustand der Schalter für eine bestimmte Zeitspanne erhalten, so weist dies auf einen statischen Belastungszustand hin und die Niveauregelung reagiert entsprechend.

Bei normaler Straßenfahrt des Schleppers ergeben sich Schwingungsamplituden der Vorderachse, die nicht den gesamten Federweg beanspruchen. Hierbei reagieren die beiden mittleren Schalter auf die Schwingungen. Der Mikroprozessor erfaßt in vorgebbaren Zeittakten die Schaltzustände und gibt erst nach mehreren Zeittakten, beispielsweise alle 15 Sekunden, entsprechende Steuersignale an das Niveauventil ab, wenn die Häufigkeit der Schaltzustände anzeigt, daß eine Abweichung von dem gewünschten Niveau vorliegt. In diesem Fall wird das Niveauventil kurzfristig im gewünschten Sinne betätigt, und es erfolgt eine schrittweise Annäherung an die gewünschte Niveaulage. Dies bedeutet, daß die Niveauregelung nicht bei jeder schwingungsbedingten Schaltzustandsänderung anspricht.

Bei großen Schwingungen können jedoch die beiden mittleren Schalter gleich häufig geschaltet werden, obwohl die Schwingung nicht um die gewünschte Niveaulage erfolgt. Die Signale der beiden mittleren Schalter lassen sich hierbei nicht zur Niveauregelung heranziehen. Hier sind die beiden äußeren Schalter von Vorteil, die mit einem größern Abstand zur Niveaulage angeordnet sind. Diese Schalter sollten nur wenig über der Schwingungsamplitude positioniert sein, die bei normaler Straßenfahrt zu erwarten ist. Schwingt die Vorderachse mit großen Amplituden nicht um die gewünschte Niveaulage, so befindet sich einer der beiden äußeren Schalter häufiger in einem bestimmten Schaltzustand als der andere und veranlaßt eine Niveauanpassung. Die beiden mittleren Schalter zeigen hingegen gleichhäufige Schaltzustände an.

Für eine kompakte Bauweise, die relativ wenig Bauraum beansprucht, montage- und servicefreundlich sowie kostengünstig herstellbar ist, werden die hydraulischen Komponenten wie Druckminderungsventile, Druckbegrenzungsventile, Proportionaldrosselventile, Konstantdrosseln, Rückschlagventile, Sperrventile und Niveauventile soweit wie möglich zu einem Ventilblock zusammengefaßt.

Bei der Starrachse handelt es sich vorzugsweise um eine Lenkachse, die gegebenenfalls auch angetrieben sein kann. Eine bevorzugte Anwendung der erfindungsgemäßen Radaufhängung ist bei gefederten Vorderachsen von Traktoren gegeben, die beispielsweise Pendelbewegungen um die Schlepperlängsachse mit einem Pendelwinkel bis zu 12° ausführen können.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    die Perspektivische Ansicht eines Ackerschleppers mit einer erfindungsgemäßen Radaufhängung,

Fig. 2    die Schrägstellung der Zylinder,

Fig. 3    die hydraulische Schaltungsanordnung einer Ausführungsvariante für eine lastabhängige Dämpfung,

Fig. 4    die hydraulische Schaltungsanordnung eines erfindungsgemäßen Feder-Dämpfungssystems,

Fig. 5    die Ansicht auf ein Niveauregelgestänge, von vorn

Fig. 6    die Seitenansicht eines Niveauregelgestänges,

Fig. 7    eine schematische Darstellung der Positionen der Schalter in bezug auf die Niveaulage und

Fig. 8    einen Mikroprozessor mit Anschlüssen.

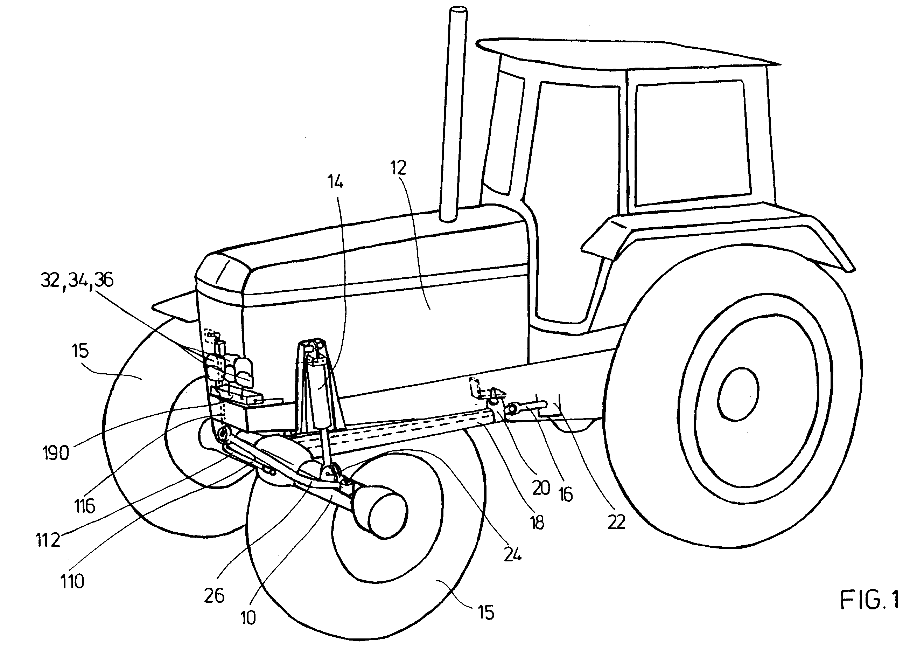

Der Ackerschlepper gemäß Fig. 1 weist eine angetriebene Vorderachse (Starrachse) 10 auf, die den vorderen Teil des Fahrzeugaufbaus 12 über zwei Hydraulikzylinder 14, von denen nur einer sichtbar ist, federnd trägt, und an der die Vorderräder 15 befestigt sind.

Ein Schubrohr 18 übernimmt die Längsführung der Vorderachse 10 und stützt die Antriebs- und Bremskräfte ab. Die Antriebswelle 16 ist durch das Schubrohr 18 hindurch geführt, und beide sind mittig an der Vorderachse 10 befestigt. Es ist hierbei nicht erforderlich, die Länge des Schubrohres 18 der Länge der Antriebswelle 16 anzupassen. Eine kürzere Schubrohrausführung hat den Vorteil, daß das erste Stück der Antriebswelle 16 vom Getriebe 22 bis zur Schubrohrbefestigung 20 am Fahrzeugaufbau 12 zusätzlich gelagert werden kann. Erst mit dem Schubrohr 18 knickt die Antriebswelle 16 ab. Die durch die Lageänderung des Schubrohres 18 beim Einfedern bedingten Längen- und Winkeländerungen an der Antriebswelle 16 werden durch ein nicht gezeigtes homokinetisches Gleichlaufgelenk aufgenommen. Die zusätzliche Lagerung der Antriebswelle 16 verbessert die schwingungstechnischen Eigenschaften der Antriebswelle 16, da die freie Schwingungslänge kürzer wird. Abstandsänderungen vom Getriebe 22 zum Schubrohranfang, bedingt durch unterschiedliche Getriebevarianten, werden durch die Länge des ersten Abschnittes der Antriebswelle 16 ausgeglichen. Das Schubrohr 18 und die Befestigungsaugen 24 für die Hydraulikzylinder 14 sind Bestandteile der Vorderachse 10. Ein Panhardstab (Querlenker) 26 ist mit einem Ende gelenkig am Fahrzeugaufbau 12 und mit dem anderen Ende gelenkig an der Vorderachse 10 befestigt und nimmt die zwischen Vorderachse 10 und Fahrzeugaufbau 12 wirkenden Querkräfte auf.

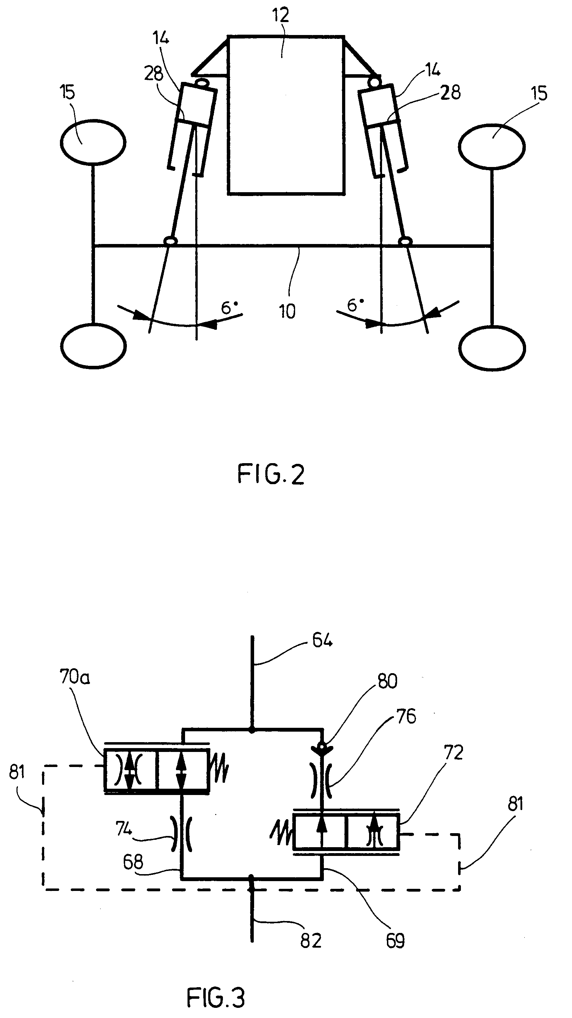

Die Hydraulikzylinder 14 mit hydropneumatischen Federungsstützen nehmen im wesentlichen die vertikalen Kräfte zwischen Fahrzeugaufbau 12 und Vorderachse 10 auf. Die Anbindung der Hydraulikzylinder 14 am Fahrzeugaufbau 12 und der Vorderachse 10 geht schematisch aus Fig. 2 hervor. Die Hydraulikzylinder 14 sind mit einem Winkel von ca. 6° gegenüber der Horizontalen geneigt und laufen unten auseinander. Hierdurch erhält die Vorderachse eine bessere Seitenführung als bei senkrechter Anordnung. Unter Berücksichtigung eines ausreichenden Federweges der Hydraulikkolben 28 von beispielsweise 180 mm kann der Pendelwinkel auf einen gewünschten maximalen Wert (beispielsweise 12°) begrenzt werden. Die maximalen Federwege lassen sich durch hydraulisch wirkende Endanschläge oder solche mit Elastomerwerkstoffen begrenzen, was noch näher beschrieben werden wird.

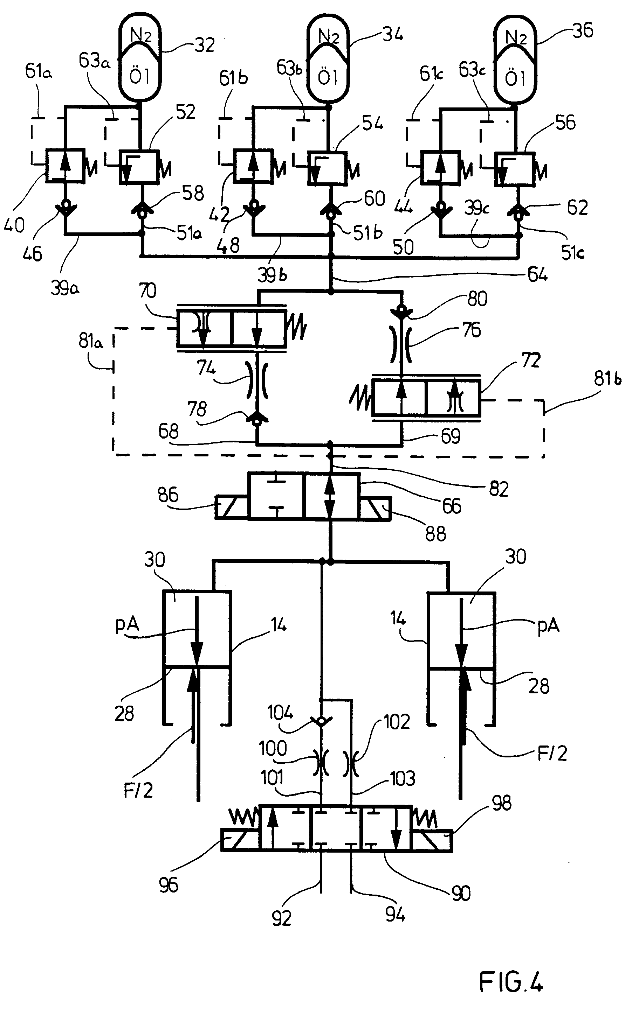

Aus Fig. 4 geht die hydraulische Schaltung des erfindungsgemäßen hydropneumatischen Federungssystem mit zwei einfach wirkenden Hydraulikzylindern 14 hervor. Auf die Unterseite der Hydraulikkolben 28 wirkt jeweils die halbe Vorderachslast F/2. Auf die Oberseite der Hydraulikkolben 28 wirkt eine Kraft, die gleich dem Produkt aus Hydraulikdruck p und Kolbenfläche A ist. Sind die Kräfte gleich $(F/2 = p \times A)$, so befinden sich die Hydraulikkolben 28 im Gleichgewicht und verschieben sich nicht im Hydraulikzylinder 14. Die Ölräume 30 an der Kolbenoberseite sind über diverse Ventile wahlweise mit drei Hydrospeichern 32, 34 und 36 verbindbar. Beim Ausfedern vergrößern sich die Ölräume 30. Das benötigte Ölvolumen wird aus den angeschlossenen Druckspeichern 32, 34, 36 nachgeliefert. Durch die hierbei auftretende Expansion des Stickstoffgases in den Druckspeichern 32, 34, 36 fällt der Druck und damit die von oben auf die Kolben wirkende Kraft, so daß sich ein Gleichgewichtszustand einstellt. Beim Einfedern kehren sich die geschilderten Vorgänge um.

Druckspeicher sind beispielsweise aus der DE 36 09 534 C1 bekannt geworden. Die drei Druckspeicher 32, 34, 36 haben unterschiedliche Volumina und sind unterschiedlich vorgespannt. Beispielsweise hat der Druckspeicher 32 ein Nennvolumen von 1,5 l, einen zulässigen Betriebsdruck von 330 bar und eine Gasvorspannung von 43 bar; der Druckspeicher 34 hat ein Nennvolumen von 1,0 l, einen zulässigen Betriebsdruck von 200 bar und eine Gasvorspannung von 18 bar; und der Druckspeicher 36 hat ein Nennvolumen von 1,3 l, einen zulässigen Betriebsdruck von 50 bar und eine Gasvorspannung von 5,5 bar. Diese Druckspeicher 32, 34, 36 erlauben eine Abfederung unterschiedlicher statischer Drücke zwischen ca. 10 und 120 bar und dynamischer Drücke zwischen ca. 25 und 275 bar.

Die drei Druckspeicher 32, 34, 36 stehen jeweils über Zuströmleitungen 39a, 39b, 39c, die jeweils ein Druckminderungsventil 40, 42, 44 und ein in Reihe geschaltetes Rückschlagventil 46, 48, 50 enthalten sowie jeweils über Rückströmleitungen 51a, 51b, 51c, die jeweils ein Druckbegrenzungsventil 52, 54, 56 und ein in Reihe geschaltetes Rückschlagventil 58, 60, 62 enthalten, mit einer gemeinsamen, zu den Hydraulikzylindern 14 führenden Leitung 64 in Verbindung.

Die Druckminderungsventile 40, 42, 44 sind federvorgespannt und schließen selbsttätig bei einem vorgebbaren Druck, indem sie über entsprechende Steuerleitungen 61a, 61b, 61c den Hydraulikdruck am zugehörigen Druckspeicher 32, 34, 36 erfassen und bei Erreichen des vorgebbaren Druckes das Ventil gegen die Kraft der Feder schließen. Beispielsweise nimmt der Schließdruck für das Druckminderungsventil 40 einen Wert von 320 bar, für das Druckminderungsventil 42 einen Wert von 100 bar und für das Druckminderungsventil 44 einen Wert von 42 bar ein. Die Rückschlagventile 46, 48, 50 verhindern, daß Hydrauliköl von den Druckspeichern 32, 34, 36 über die Zuströmleitung 39a, 39b, 39c zur gemeinsamen Leitung 64 fließt.

Die Druckbegrenzungsventile 52, 54, 56 sind ebenfalls federvorgespannt und öffnen selbsttätig bei einem vorgebbaren Druck, indem sie über jeweilige Steuerleitungen 63a, 63b, 63c den Hydraulikdruck am zugehörigen Druckspeicher 32, 34, 36 erfassen und bei Erreichen des vorgebbaren Druckes das jeweilige Ventil gegen die Kraft der Feder öffnen. Beispielsweise nimmt der Öffnungsdruck für das Druckbegrenzungsventil 52 einen Wert von 90 bar, für das Druckbegrenzungsventil 54 einen Wert von 34 bar und für das Druckbegrenzungsventil 56 einen Wert von 6 bar ein. Die Rückschlagventile 58, 60 und 62 verhindern, daß Hydrauliköl von der gemeinsamen Leitung 64 über die Rückströmleitungen 51a, 51b, 51c zu den Druckspeichern 32, 34, 36 fließt. Die Funktionsweise der Ventile wurde bereits in der Beschreibungseinleitung näher beschrieben.

Zwischen der gemeinsamen Leitung 64 und den Ölräumen 30 der Hydraulikzylinder 14 sind ein lastabhängiges Dämpfungssystem und ein Sperrventil 66 eingefügt. Für das lastabhängige Dämpfungssystem werden zwei bevorzugte Alternativen nachfolgend beschrieben. Die eine Alternative geht aus Fig. 4, die andere aus Fig. 3 hervor.

Bei beiden Alternativen enthält das Dämpfungssystem in einer Hinflußleitung 69 und einer Rückflußleitung 68 je eine von zwei hydraulisch zueinander parallelliegende Proportionaldrosselventile 70, 70a, 72, zu denen jeweils eine Konstantdrossel 74, 76 und gegebenenfalls ein Rückschlagventil 78, 80 hydraulisch in Reihe liegt. Die Proportionaldrosselventile 70, 70a, 72 sind federvorgespannt und in Ruhestellung ungedrosselt, d. h. offen. Die Drosselquerschnitte werden proportional zu dem Druck, der in der zu den Hydraulikzylindern 14 führenden Leitung 82 herrscht, verstellt, indem der in der Leitung 82 herrschende Druck über die Steuerleitungen 81a und 81b den Proportionaldrosselventilen 70, 70a, 72 zugeführt wird und deren Schieber gegen die Kraft einer Feder verschiebt. Da größere Vorderachslasten einen höheren Systemdruck bewirken, stellen sich für Ausrüstungszustände des Schleppers mit höheren Vorderachslasten höhere Dämpfungsfaktoren ein. Um die Federwirkung bei raschen Lastwechseln zu erhalten, können die Steuerleitungen 81a und 81b über ihre Leitungsquerschnitte so stark gedrosselt werden, daß die Proportionaldrosselventile 70, 70a, 72 bei dynamischen Druckerhöhungen und Druckabsenkungen nicht ansprechen.

Die Unterschiede in den Ausführungsbeispielen gemäß Fig. 4 und 3 liegen in der Erzielung unterschiedlicher Dämpfung für die Druck- und Zugstufe der Federung. Bei der Variante gemäß Fig. 4 sind die Drosselstellen für das Einfedern (Druckstufe) und für das Ausfedern (Zugstufe) durch die Rückschlagventile 78 und 80 getrennt. Die unterschiedliche Dämpfung für beide Stufen wird durch eine unterschiedliche Auslegung der Drosselquerschnitte für das Ein- und das Ausfedern erreicht. Bei der Variante gemäß Fig. 3 werden beim Einfedern beide Ölleitungen 68 und 69 der Parallelschaltung durchflossen. Durch die Sperrung des einen Zweigs über das Rückschlagventil 80 kann beim Ausfedern nur eine Leitung 69 durchflossen werden. Die gesamte Ölmenge muß hierbei über die Drosselstellen in dieser Leitung 69 strömen. Dies bedeutet eine höhere Dämpfung bezogen auf die Dämpfung beim Einfedern.

Um die Federwirkung beispielsweise für Pflugarbeiten sperren zu können, ist ein Sperrventil 66 vorgesehen, welches als elektrisch betätigbares 2/2-Wegeventil (Impulsventil) ausgeführt ist. Wird das Sperrventil 66 über die Spule 86 bei Betätigung eines nicht dargestellten Tasters angesteuert, so werden die Federungsspeicher 32, 34, 36 von den beiden Hydraulikzylindern 14 getrennt. Die Federung ist gesperrt. Das Sperrventil 66 ist zwischen dem Dämpfungssystem und dem Anschluß eines Niveauventils 90 angeordnet, so daß die Proportionaldrosselventile 70, 70a, 72 des Dämpfungssystems im gesperrten Zustand der Federung nicht unnötig angesteuert werden, jedoch das Niveauventil 90 weiterhin in der Lage ist, die Ölmenge in den Hydraulikzylindern 14 zu variieren. Dies ermöglicht eine Niveauangleichung der Vorderachse 10 im gesperrten Zustand der Federung für den Fall, daß die Achse nicht die gewünschte Niveaulage einnimmt. Eine Pendelbewegung bei gesperrter Federung schiebt die Ölmenge vom einen in den anderen Zylinder. Durch eine andere Tasterbetätigung bekommt das Sperrventil 66 über die Spule 88 ein Schaltsignal. Das Sperrventil 66 schaltet nun auf Durchfluß und die Federspeicher 32, 34, 36 sind wieder in Betrieb.

Das bereits erwähnte Niveauventil 90 ist ein elektrisch betätigbares federzentriertes 4/3-Wegeventil. In der dargestellten Zentrierstellung ist der Ölkreis des Federungssystems von einer zur Hydraulikdruckquelle des Schleppers führenden Leitung 92 und einer Hydraulikrücklaufleitung 94 getrennt. Das Niveauventil 90 nimmt diese Zentrierstellung ein, wenn die gewünschte Niveaulage eingestellt ist. Bei erforderlicher Niveau- und damit auch Ölvolumenkorrektur läßt sich das Niveauventil 90 über die beiden Spulen 96, 98 umschalten. Die Schaltstellung, bei der die Spule 96 aktiviert ist, bewirkt eine Ölzufuhr in das Federungssystem (Niveauanhebung). Ein Ölabfluß aus dem Federungssystem (Niveauabsenkung) erfolgt bei Aktivierung der Spule 98. Über die Drosseln 100, 102 im Füllleitungszweig 101 und im Entleerleitungszweig 103 wird eine langsame Niveauangleichung für beide Ölströmungsrichtungen erreicht. Ein Rückschlagventil 104 in dem Füllleitungszweig 101 verhindert ein Entweichen von Öl bei Zuschaltung über die Spule 96 für den Fall, daß der dynamische Systemdruck im Federungssystem den maximalen Öldruck der Schlepperhydraulikpumpe von beispielsweise 160 bar übersteigt.

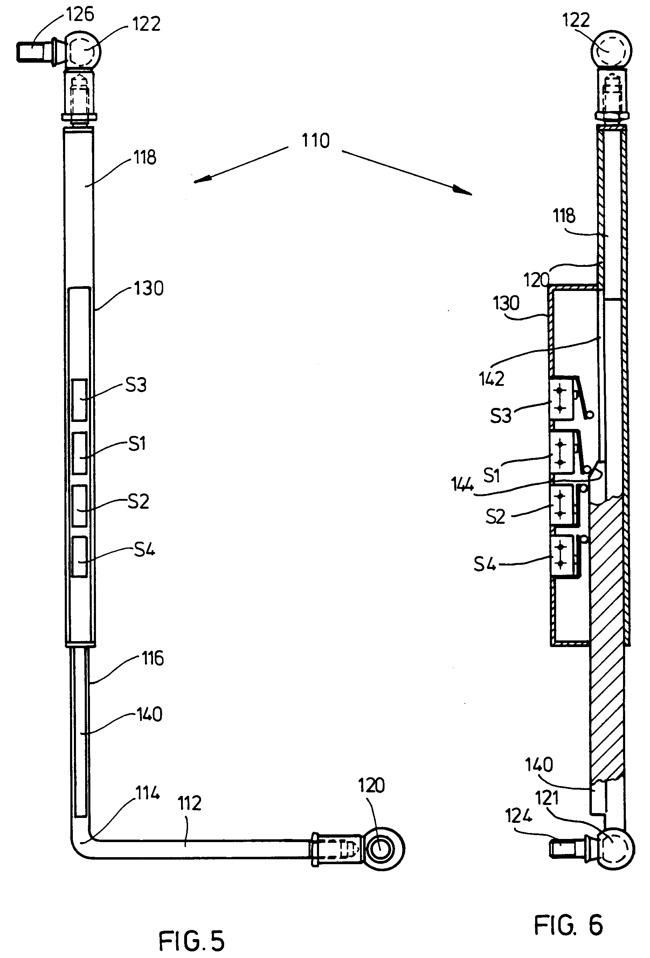

Zur automatischen Erfassung der Höhenlage des Fahrzeugaufbaus 12 über der Vorderachse 10 ist eine in den Figuren 5 und 6 näher dargestellte Niveauregelstange 110 vorgesehen, deren eines Ende im Bereich der vertikalen Mittellinie der Vorderachse 10 gelenkig mit dieser verbunden ist. Von hier aus erstreckt sich die Niveauregelstange 110 mit ihrem ersten Abschnitt 112 im wesentlichen horizontal und parallel zur Vorderachse 10, bis zu einem Kniepunkt 114, von wo aus die Niveauregelstange 110 mit ihrem zweiten Abschnitt 116 eine im wesentlichen vertikale Ausrichtung einnimmt. Das senkrecht nach oben weisende Ende der Niveauregelstange 110 wird von einer Rohrführung 118 längsverschiebbar aufgenommen. Das obere Ende der Rohrführung 118 ist gelenkig an der Innenfläche eines seitlichen Chassisteils des Fahrzeugaufbaus 12 befestigt. Als Befestigungspunkte an der Vorderachse 10 und am Chassis dienen Winkelgelenke 121, 122 mit der Befestigung dienenden Gewindeabschnitten 124, 126.

Die Rohrführung 118 ist im wesentlichen als Hohlzylinder 120 ausgebildet und trägt in ihrem den zweiten Abschnitt 116 der Niveauregelstange aufnehmenden Bereich ein zur Fahrzeugvorderseite hin ausgerichtetes Gehäuse 130. In dem Gehäuse 130 sind in Zylinderlängsrichtung übereinander vier Mikroschalter S1, S2, S3, S4 angeordnet. Es handelt sich beispielsweise um Subminiaturschalter der Serie SE der Firma Honeywell. In dem Hohlzylinder 120 ist der im wesentlichen zylindrisch ausgebildete zweite Abschnitt 116 der Niveauregelstange 110 geführt. Längs eines Teilbereichs dieses zweiten Abschnitts 116 ragt ein zur Fahrzeugvorderseite weisender Vorsprung 140 über die Zylinderkontur hervor. Dieser Vorsprung 140 erstreckt sich radial durch einen Längsschlitz 142 in dem Hohlzylinder 120. Das obere Ende des Vorsprungs 140 ist abgeschrägt und bildet einen Nocken 144, durch den die Schalter S1, S2, S3, S4 bei einer Relativbewegung zwischen Niveauregelstange 110 und Rohrführung 118, also auch zwischen Vorderachse 10 und Fahrzeugaufbau 12, betätigbar sind.

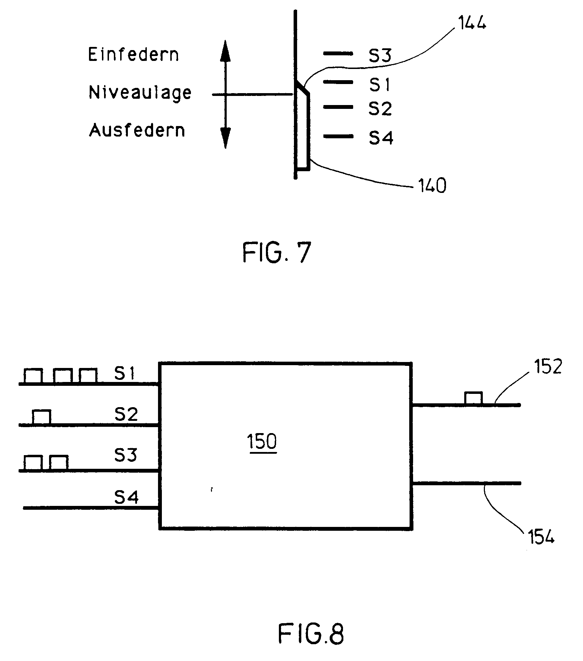

Anhand der Fig. 7 werden im folgenden die unterschiedlichen Schaltzustände der Schalter S1, S2, S3, S4 erläutert:

Gefordert wird ein Ansprechen der Niveauregelung bei statischen Belastungsänderungen (Änderungen des Ausrüstungszustandes des Fahrzeuges) und bei Lageänderungen der Achse während der Fahrt durch Leckageverluste oder durch Volumenänderungen des Stickstoffgases in den Hydrospeichern 32, 34, 36. Bei kurzzeitigen Schwingungen soll die Niveauregelung hingegen nicht ansprechen. Für eine solche Regelung sind vier Schalter S1, S2, S3, S4 vorgesehen, welche durch den Nocken 144 an der Regelstange 110 betätigt werden. Die beiden mittleren Schalter S1 und S2 sind beidseits des Nockens 144 angeordnet, sofern die gewünschte Niveaulage eingenommen wird. In diesem Fall ist der Schalter S1 geöffnet und der Schalter S2 geschlossen. Bei Belastungsänderungen verschiebt sich der Nocken 144 aus der Niveaulage, und es wird entweder der Schalter S1 geschlossen (Einfederung) oder der Schalter S2 geöffnet (Ausfederung). Zum Ausgleich statischer Belastungsänderungen können die Schalterzustände unmittelbar zum Niveauausgleich herangezogen werden.

Bei der Auswertung der Schaltstellungen der Schalter S1 und S2 sollen Schwingungseinflüsse, die lediglich eine vorübergehende Abweichung von der Niveaulage bedingen, unterdrückt werden. Hierfür werden die Schalterstellungen durch einen Mikroprozessor 150 (Fig. 8) in regelmäßigen Zeitintervallen erfaßt und ausgewertet. Nimmt über ein vorgebbares Meßzeitintervall der Schalter S1 häufiger die geöffnete Stellung ein als der Schalter S2 seine geschlossene Stellung, so bedeutet dies, daß der Fahrzeugaufbau 12 angehoben werden muß. In diesem Fall wird von dem Mikroprozessor 150 über die Steuerleitung 152 ein entsprechendes Steuersignal an die Spule 96 des Niveauregelventils 90 abgegeben, um die Hydraulikzylinder 14 für einen vorgebbaren kurzen Zeitraum an das Hydraulikdrucksystem des Fahrzeuges anzuschließen. Nimmt hingegen der Schalter S2 häufiger die geöffnete Stellung ein als der Schalter S1 seine geschlossene Stellung, so wird über die Steuerleitung 154 die Spule 98 aktiviert, um für einen vorgebbaren kurzen Zeitraum Öl aus den Zylindern 14 abzulassen. Dieser Vorgang kann gegebenenfalls so lange wiederholt werden, bis die Niveaulage erreicht ist. Infolge der Drosselung des Öldurchflusses durch die Drosseln 100 und 102 kann eine asymptotische Annäherung an die Niveaulage erreicht werden. Bei einem Schaltzustand, der auf eine größere statische Belastungsänderung schließen läßt und für den eine größere Ölvolumendifferenz für den Niveauausgleich benötigt wird, erfolgt die Ölregulierung bis zur Niveaulage in einem Vorgang.

Beim Auftreten größerer Schwingungsamplituden reicht die Aussagekraft der Schalterstellungen der Schalter S1 und S2 für eine Niveauregelung nicht aus, da hierbei die Schalter S1 und S2 gleich häufig aus ihrer die Niveaulage kennzeichnenden Schaltstellung abweichen können, obwohl die Vorderachse 10 nicht um die Niveaulage schwingt. Es sind daher die beiden Schalter S3 und S4 vorgesehen, die mit einem größeren Abstand beidseits der Niveaulage angeordnet sind. Die Schalter S3 und S4 sind so positioniert, daß sie jenseits der Schwingungsamplituden liegen, die bei normaler Straßenfahrt auftreten. Der Abstand zwischen der Niveaulage und dem Schalter S3 oder S4 kann beispielsweise 10 % des Gesamtfederweges zuzüglich der Schwingungsamplitude, die bei normaler Straßenfahrt auftritt, betragen. Bei der Niveaulage ist der Schalter S3 geöffnet und der Schalter S4 geschlossen. Wandert bei starken Schwingungen der Vorderachse 10 diese aus der Niveaulage heraus, so kann einer der beiden Schalter S3, S4 häufiger aus seinem Niveaulagenschaltzustand abweichen als der andere Schalter S4, S3. Hiebei können jedoch die Schalter S1 und S2 gleich häufig von ihren Niveaulagenschaltzuständen abweichen. Der Mikroprozessor wertet diese Schaltzustände aus und steuert das Niveauregelventil 110 entsprechend an.

Die beschriebenen Ventile für das Federungssystem, die Dämpfung, den Niveauausgleich und das Absperren der Federung sind in einem gemeinsamen Ventilblock 190 zusammengefaßt. Dieser Ventilblock 190 ist in Fig. 1 unterhalb der drei Hydrospeicher 32, 34, 36 dargestellt.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1. Radaufhängung für ein Fahrzeug, insbesondere für Nutz- und landwirtschaftliche Fahrzeuge, mit wenigstens einem zwischen Fahrzeugaufbau (12) und Radträger (10) angeordneten Hydraulikzylinder (14), der durch eine Ventilanordnung wahlweise mit einem von wenigstens zwei unterschiedlich vorgespannten Hydrospeicher (32, 34, 36) verbindbar ist, dadurch gekennzeichnet, daß zwischen jedem Hydrospeicher (32, 34, 36) und dem wenigstens einen Hydraulikzylinder (14) in einer Zuströmleitung (39a, 39b, 39c) wenigstens ein Druckminderungsventil (40, 42, 44) zur Festlegung der oberen Druckgrenze des Arbeitsbereiches des Hydrospeichers (32, 34, 36) sowie ein Rückschlagventil (46, 48, 50), das den Durchfluß von dem Hydraulikspeicher (32, 34, 36) zu dem Hydraulikzylinder (14) sperrt, und in einer Rückströmleitung (51a, 51b, 51c) ein Druckbegrenzungsventil (52, 54, 56) zur Festlegung der unteren Druckgrenze des Arbeitsbereiches des Hydrospeichers (32, 34, 36) sowie ein Rückschlagventil (58, 60, 62), das den Durchfluß von dem Hydraulikzylinder (14) zu dem Hydraulikspeicher (32, 34, 36) sperrt, angeordnet sind und daß der Schaltdruck des Druckminderungsventils (42, 44) des niedriger vorgespannten Hydrospeichers (34, 36) größer ist als der Schaltdruck des Druckbegrenzungsventils (52, 54) des höher vorgespannten Hydrospeichers (32, 34).

2. Radaufhängung nach Anspruch 1, dadurch gekennzeichnet, daß zwischen den Hydrospeichern (32, 34, 36) und dem wenigstens einen Hydraulikzylinder (14) ein Dämpfungssystem unter Verwendung wenigstens eines lastabhängig Steuerbaren Drosselventils (70, 70a, 72) vorgesehen ist.

3. Radaufhängung nach Anspruch 2, dadurch gekennzeichnet, daß das Dämpfungssystem wenigstens ein durch den auf dem wenigstens einen Hydraulikzylinder (14) lastenden Hydraulikdruck ansteuerbares Proportionaldrosselventil (70, 70a, 72) und wenigstens eine mit diesem zusammenwirkende Konstantdrossel (74, 76) enthält.

4. Radaufhängung nach Anspruch 2 oder 3, dadurch gekennzeichnet, daß das Dämpfungssystem in einer Hinflußleitung (69) und in einer Rückflußleitung (68) je wenigstens ein durch den auf dem wenigstens einen Hydraulikzylinder (14) lastenden Hydraulikdruck ansteuerbares Proportionaldrosselventil (70, 70a, 72) und wenigstens je eine Konstantdrossel (74, 76) sowie wenigstens ein Rückschlagventil (78, 80) enthält.

5. Radaufhängung nach einem der Ansprüche 1 bis 4, dadurch gekennzeichnet, daß zwischen den Druckspeichern (32, 34, 36) und dem wenigstens einen Hydraulikzylinder (14) wenigstens ein schaltbares Sperrventil (66) vorgesehen ist.

6. Radaufhängung nach einem der Ansprüche 1 bis 5, dadurch gekennzeichnet, daß in einer Verbindungsleitung zwischen dem wenigstens einen Hydraulikzylinder (14) und dem Federungssystem ein Niveauventil (90) angeordnet ist, durch welches der Hydraulikzylinder (14) wahlweise mit einer Hydraulikdruckquelle (92) oder einer Hydraulikrücklaufleitung (94) verbindbar ist.

7. Radaufhängung nach Anspruch 6, dadurch gekennzeichnet, daß im Fülleitungszweig (101) des Niveauventils (90) eine Konstantdrossel (100) und ein Rückschlagventil (104) und im Entleerleitungszweig (103) des Niveauventils (90) eine Konstantdrossel (102) vorgesehen ist.

8. Radaufhängung nach Anspruch 6 oder 7, dadurch gekennzeichnet, daß das Niveauventil (90) über eine Steuereinrichtung, vorzugsweise einen Mikroprozessor (150), der über Sensoren eine auf den Fahrzeugaufbau (12) bezogene Höhenlagebestimmung der Radträger (10) vornimmt, angesteuert wird.

9. Radaufhängung nach Anspruch 8, dadurch gekennzeichnet, daß eine Niveauregelstange (110) mit ihrem einen Ende (121) gelenkig mit dem Radträger (10) verbunden ist und mit ihrem anderen Ende (116) in einer im wesentlichen senkrecht ausgerichteten Führung (118) läuft, daß die Führung (118) gelenkig mit dem Fahrzeugaufbau (12) verbunden ist und daß die Niveauregelstange (110) wenigstens einen Nocken (144) aufweist, der mit wenigstens zwei an der Führung (118) befestigten elektrischen Schaltern (S1, S2, S3, S4) zusammenwirkt und bei einer Verschiebung der Niveauregelstange (110) in der Führung (118) Schaltfunktionen der Schalter (S1, S2, S3, S4) auslöst.

10. Radaufhängung nach Anspruch 9, dadurch gekennzeichnet, daß die Niveauregelstange (110) gelenkig in der vertikalen Mittellinie einer Starrachse (10) angreift und abgewinkelt ausgebildet ist, so daß der im wesentlichen vertikale Abschnitt (116) der Niveauregelstange (110) und der Führung (118) eine außermittige Lage einnimmt.

**Claims**

1. Wheel suspension for a vehicle, in particular for utility or agricultural vehicles, with at least one hydraulic cylinder (14), which is arranged between the vehicle body (12) and wheel support (10) and may be selectively connected to one of at least two hydraulic accumulators (32, 34, 36) with different pre-loads by a valve arrangement, characterised in that between each hydraulic accumulator (32, 34, 36) and the at least one hydraulic cylinder (14), at least one pressure reducing valve (40, 42, 44) for fixing the upper pressure limit of the operating range of the hydraulic accumulator (32, 34, 36) and also a check valve (46, 48, 50), which blocks the throughflow from the hydraulic accumulator (32, 34, 36) to the hydraulic cylinder (14), are arranged in a supply line (39a, 39b, 39c), and a pressure relief valve (52, 54, 56) for fixing the lower pressure limit of the operating range of the hydraulic accumulator (32, 34, 36) and also a check valve (58, 60, 62), which blocks the throughflow from the hydraulic cylinder (14) to the hydraulic accumulator (32, 34, 36), are arranged in a return line (51a, 51b, 51c), and that the switching pressure of the pressure reducing valve (42, 44) of the hydraulic accumulator (34, 36) with the lower pre-load is greater than the switching pressure of the pressure relief valve (52, 54) of the hydraulic accumulator (32, 34) with the higher pre-load.

2. Wheel suspension according to Claim 1, characterised in that a damping means using at least one load-sensitive controllable throttling valve (70, 70a, 72) is provided between the hydraulic accumulators (32, 34, 36) and the at least one hydraulic cylinder (14).

3. Wheel suspension according to Claim 2, characterised in that the damping means includes at least One proportional throttling valve (70, 70a, 72), which may be controlled by the hydraulic pressure acting on the at least one hydraulic cylinder (14), and at least one constant throttling restriction (74, 76) cooperating with said proportional valve.

4. Wheel suspension according to Claim 2 or 3, characterised in that in each supply line (69) and each return line (68), the damping means comprises at least one respective proportional throttling valve (70, 70a, 72), which may be controlled by the hydraulic pressure acting on the at least one hydraulic cylinder (14), and at least one respective constant throttling restriction (74, 76) and at least one check valve (78, 80).

5. Wheel suspension according to one of Claims 1 to 4, characterised in that at least one switchable blocking valve (66) is provided between the pressure accumulator (32, 34, 36) and the at least one hydraulic cylinder (14).

6. Wheel suspension according to one of Claims 1 to 5, characterised in that a level control valve (90), via which the hydraulic cylinder (14) may be selectively connected to a hydraulic pressure source (92) or a hydraulic return line (94), is arranged in a connection line between the at least one hydraulic cylinder (14) and the spring system.

7. Wheel suspension according to Claim 6, characterised in that a constant throttling restriction (100) and a check valve (104) are provided in the fill line branch (101) of the level control valve (90), and a constant throttling restriction (102) is provided in the drain line branch (103) of the level control valve (90).

8. Wheel suspension according to Claim 6 or 7, characterised in that the level control valve (90) is actuated via a control means, preferably a microprocessor (150), which detects the level position of the wheel supports (10) relative to the vehicle body (12) by means of sensors.

9. Wheel suspension according to Claim 8, characterised in that a level control rod (110) is pivotally connected at its one end (121) to the wheel support (10) and at its other end (116) runs in an essentially vertical guide (118); that the guide (118) is pivotally connected to the vehicle body (12); and that the level control rod (110) has at least one cam (144), which cooperates with at least two electric switches (S1, S2, S3, S4) fastened to the guide (118) and triggers switching functions of the switches (S1, S2, S3, S4) when the level control rod (110) is shifted in the guide (118).

10. Wheel suspension according to Claim 9, characterised in that the level control rod (110) pivotally engages in the vertical centre line of a rigid axle (10) and is of an angled construction so that the essentially vertical section (116) of the level control rod (110) and the guide (118) assumes an off-centre position.

**Revendications**

1. Suspension de roue pour un véhicule, notamment pour des véhicules utilitaires et des véhicules agricoles, comportant au moins un vérin hydraulique (14) disposé entre la carrosserie (12) du véhicule et des supports de roues (10) et qui peut être relié, par un dispositif de soupape au choix à l'un d'au moins deux accumulateurs hydrauliques (32,34,36), précontraint différemment, caractérisée en ce qu'au moins une soupape de réduction de pression (40,42,44) servant à fixer la limite supérieure de pression de la gamme de travail de l'accumulateur hydraulique (32,34,36) et une soupape antiretour (46,48,50), qui bloque le passage depuis l'accumulateur hydraulique (32,34,36) en direction du vérin hydraulique (14), sont montées entre chaque accumulateur hydraulique (32,34,36) et le au moins un vérin hydraulique (14), dans une canalisation d'amenée (39a,39b, 39c), et qu'une soupape de limitation de pression (52,54, 56) servant à déterminer la limite de pression inférieure de la gamme de travail de la mémoire hydraulique (32,34,36) ainsi qu'une soupape antiretour (58,60,62), qui bloque le passage depuis le vérin hydraulique (14) en direction de l'accumulateur hydraulique (32,34,36), sont disposées dans une canalisation de retour (51a,51b,51c), et que la pression de commutation de la soupape de réduction de pression (42,44) de l'accumulateur hydraulique (34,36), qui est plus faiblement précontraint, est supérieure à la pression de commutation de la soupape de limitation de pression (52,54) de l'accumulateur hydraulique (32,34) qui est plus fortement précontraint.

2. Suspension de roue selon la revendication 1, caractérisé en ce qu'un système amortisseur est prévu entre les accumulateurs hydrauliques (32,34,36) et le au moins un vérin hydraulique (14), moyennant l'utilisation d'au moins une soupape d'étranglement (70,70a,72) pouvant être commandée en fonction de la charge.

3. Suspension de roue selon la revendication 2, caractérisée en ce que le système d'amortissement contient au moins une soupape d'étranglement à action proportionnelle (70,70a,72), pouvant être commandée par la pression hydraulique qui charge le au moins un vérin hydraulique (14), et contient au moins un étranglement constant (74,76) qui coopère avec cette soupape d'étranglement.

4. Suspension de roue selon la revendication 2 ou 3, caractérisée en ce que le système d'amortissement contient, dans une canalisation aller (69) et dans une canalisation retour (68), respectivement au moins une soupape d'étranglement à action proportionnelle (70,70a,72), pouvant être commandée par la pression hydraulique qui charge le au moins un vérin hydraulique (14), et au moins respectivement un étranglement constant (74,76) ainsi qu'au moins une soupape antiretour (78,80).

5. Suspension de roue selon l'une des revendications 1 à 4, caractérisée en ce qu'au moins une soupape d'arrêt commutable (66) est prévue entre les accumulateurs de pression (32,34,36) et le au moins un vérin hydraulique (14).

6. Suspension de roue selon l'une des revendications 1 à 5, caractérisée en ce que dans une canalisation de liaison entre le au moins un vérin hydraulique (14) et le système de suspension est montée une soupape de réglage de niveau (90), au moyen de laquelle le vérin hydraulique (14) peut être relié au choix à une source de pression hydraulique (93) ou à une canalisation de retour hydraulique (94).

7. Suspension de roue selon la revendication 6, caractérisée en ce qu'un étranglement constant (100) et une soupape antiretour (104) sont prévus dans la branche (101) de la canalisation de remplissage de la soupape de réglage de niveau (90) et qu'un étranglement constant (102) est prévu dans la branche (103) de la canalisation de guidage de la soupape de réglage de niveau (90).

8. Suspension de roue selon la revendication 6 ou 7, caractérisée en ce que la soupape de réglage de niveau (90) est commandée par l'intermédiaire d'un dispositif de commande, de préférence un microprocesseur (150), qui réalise, au moyen de capteurs, une détermination, rapportée à la carrosserie (12) du véhicule, de la position en hauteur des supports de roues (10).

9. Suspension de roue selon la revendication 8, caractérisée en ce qu'une tige de régulation de niveau (110) est reliée de façon articulée, par une extrémité (121), au support de roue (10) et que son autre extrémité (116) circule dans un guide (118) orienté essentiellement verticalement, que le guide (118) est relié d'une manière articulée à la carrosserie (12) du véhicule et que la tige de régulation de niveau (110) possède au moins une came (144), qui coopère avec au moins deux interrupteurs électriques (S1,S2,S3,S4) qui sont fixés au guide (118) et déclenchent des fonctions de commutation des commutateurs (S1,S2,S3,S4) dans le cas d'un déplacement de la tige de régulation de niveau (110) dans le guide (118).

10. Suspension de roue selon la revendication 9, caractérisée en ce que la tige de régulation de niveau (110) attaque, d'une manière articulée, l'axe central vertical d'un essieu rigide (10) et est agencée avec une forme coudée de sorte que la section (116), qui est essentiellement verticale, de la tige de régulation de niveau (110) et du guide (118) prend une position excentrée.

FIG. 1

EP 0 543 321 B1

FIG.2

FIG.3

FIG.4

FIG.5

FIG. 6

Einfedern

Niveaulage

Ausfedern

S3  144
S1
S2
S4

140

FIG. 7

S1
S2
150
S3
S4

152

154

FIG.8